# EUROPÄISCHE PATENTSCHRIFT

(11) **EP 1 041 269 B1**
(45) Veröffentlichungstag und Bekanntmachung des Hinweises auf die Patenterteilung: **19.11.2003**
(21) Anmeldenummer: 00105258.8
(22) Anmeldetag: 14.03.2000
(51) Int. Cl.: F02M 25/07

(54) **Vorrichtung zur gesteuerten Abgasrückführung in eine Luftzufuhreinrichtung einer Brennkraftmaschine**
Device for a controlled exhaust gas recirculation in an air supply assembly for an internal combustion engine
Dispositif pour la recirculation de gaz d'échappement regulée dans un conduit d'air d'admission d'un moterur à combustion interne

(30) Priorität: 31.03.1999 DE 19914535
(43) Veröffentlichungstag der Anmeldung: 04.10.2000
(73) Patentinhaber: Bayerische Motoren Werke Aktiengesellschaft, 80809 München (DE)
(72) Erfinder: Schreck, Claus-Peter, 85521 Ottobrunn (DE)

(56) Entgegenhaltungen:
- EP-A- 0 354 299
- DE-A- 4 420 247
- DE-A- 19 607 810
- DE-A- 19 636 806
- DE-A- 19 645 280
- DE-C- 19 725 668
- US-A- 1 432 751
- US-A- 4 693 226
- US-A- 5 666 930

## Beschreibung

Die Erfindung bezieht sich nach dem Oberbegriff des Patentanspruches 1 auf eine Vorrichtung zur gesteuerten Abgasrückführung in eine Luftzufuhreinrichtung einer Brennkraftmaschine, wobei ein zwischen Leitungsabschnitten der Luftzufuhreinrichtung vorgesehenes Mischgehäuse eine bauliche Einheit mit einem Abschnitt einer Abgasrückführleitung und einem darin angeordneten, mit einem ansteuerbaren Antrieb wirkverbundenen Tellerventil bildet.

Eine derartige Vorrichtung ist beispielsweise aus der DE 197 25 668 C1 bekannt, wobei das Abgas über einen im Strömungsquerschnitt der Luftzufuhreinrichtung radial vorstehenden Abschnitt einer Abgasrückführleitung in eine zum Strömungsquerschnitt koaxiale Düse ventilgesteuert zugeführt ist. Neben den im Strömungsquerschnitt vorgesehenen Einbauten besonders nachteilig ist die mittige Einspeisung des Abgases, wofür zur einwandfreien Durchmischung eine relativ lange Strömungsstrecke erforderlich ist.

Diesem Nachteil kann mit einem aus der DE 196 45 280 A1 bekannten Mischgehäuse begegnet werden, wobei das zwischen Leitungsabschnitten der Luftzufuhreinrichtung anordbare Mischgehäuse einen abgedeckten Ringkanal umfaßt, aus dem das Abgas über einen mittels der Abdeckung gebildeten düsenartigen Schlitz in Strömungsrichtung der Luft ausströmt. Nachteilig hierbei ist die Ungleichverteilung des in die Luftzufuhreinrichtung abströmenden rückgeführten Abgases über den Düsenringquerschnitt dadurch, daß je nach den herrschenden Druckverhältnissen im Bereich der Zuführstelle des Abgases über den Düsenschlitz mehr abströmt als am diametral gelegenen Bereich, so daß auch hier wieder eine erhebliche Leitungslänge für eine gute Durchmischung erforderlich ist.

Zur Behebung dieses Nachteiles ist es dem Fachmann aus der DE 196 36 806 A1 bekannt, das in einen Ringkanal in einer Luftführungseinrichtung zugeführte Abgas mittels über den Umfang verteilt angeordneter Öffnungen abströmen zu lassen, wobei diese Abströmöffnungen in Verbindung mit einem Schieber mit entsprechend zugeordneten Druchtrittsöffnungen zugleich der Mengensteuerung dienen. Der über einen elektrischen Antrieb steuerbare Schieber ist in nachteiliger Weise bauaufwendig und aufgrund des sicheren Bewegungsspiels nicht ausreichend abgasdicht.

Eine abgasdichte Vorrichtung zeigt beispielsweise die DE 196 07 810 A1, bei der ein radial in den Strömungsquerschnitt der Luft ragender Stutzen einer Abgasrückführleitung über ein Tellerventil gesteuert ist, wobei das Tellerventil in Schließrichtung von einer Rückstellfeder beaufschlagt ist und in Öffnungsrichtung eine vorgesehene Verstelleinrichtung einen rotatorisch arbeitenden Antrieb und eine dem Antrieb nachgeschaltete, getriebliche Umformeinrichtung mittels eines Nockens aufweist, mittels der die Drehantriebsbewegung des Antriebes in eine Translationsbewegung des Tellerventils umformbar ist. Nachteilig hierbei ist neben der ungünstigen Abgaszuführung in den Leitungsquerschnitt der angesaugten Luft die zusätzlich vorgesehene Membran, mittels der zum einen der Druck des zugeführten Abgases und zum anderen der Druck im Saugrohr kompensiert werden soll.

Der Erfindung liegt die Aufgabe zugrunde, aus im vorgenannten Stand der Technik für sich bekannten Mitteln eine gattungsgemäße Vorrichtung ohne die vorgenannten Nachteile derart weiterzubilden, daß bei hochintegrierter Bauweise eine einfache Funktionsverknüpfung von Mischgehäuse und mechanischem Regelbauteil erzielt ist, und daß ferner bei reduziertem Gewicht die Vorrichtung in eine Luftzufuhreinrichtung einfach integrierbar ist, wobei die Vorrichtung schließlich eine geringe Empfindlichkeit gegen Verschmutzung und thermische Belastung aufweist.

Diese Aufgabe ist mit dem Patentanspruch 1 gelöst. Gemäß der Erfindung ist vorgesehen, daß das Mischgehäuse einen von einer Wandung eines Leitungsdurchganges begrenzten Ringkanal aufweist, der mittels über den Umfang des Leitungsdurchganges in der Wandung verteilt angeordneter Durchbrechungen der Abgaseinführung in die zugeführte Luft dient, wobei der zwischen planen Anschlußflächen eines flach bzw. axial kurz gestalteten Mischgehäuses sich axial erstreckende Ringkanal mit einer stromab des Tellerventils angeordneten Überströmkammer in dem als Abschnitt der Abgasrückführleitung gestalteten Ventilgehäuse in abgasführender Verbindung steht, und wobei ferner das von einer Schließfeder beaufschlagte Tellerventil von einem zur Ventilbewegungsrichtung rechtwinklig am Mischgehäuse angeordneten Antrieb gesteuert angetrieben ist.

Mit der Erfindung ist in vorteilhafter Weise bei hochintegrierter Bauweise eine einfache Funktionsverknüpfung von Mischgehäuse und mechanischem Regelbauteil erzielt, wobei das Abgas stromab des geöffneten Tellerventils über die Überströmkammer in den Ringkanal in vorteilhafter Weise tangential eintreten kann, was den Vorteil einer gleichmäßigeren Abgasverteilung über den gesamten Ringkanal ergibt mit dem weiteren Vorteil, daß über alle über den Innenumfang des Leitungsdurchganges in der Wandung vorgesehenen Durchbrechungen etwa gleiche Mengen an Abgas austreten.

In Ausgestaltung der Erfindung können zur verbesserten Durchmischung von Abgas und Ansaugluft die Durchbrechungen in der Wandung des Leitungsdurchganges im Mischgehäuse gleichmäßig und/oder ungleichmäßig über den Umfang verteilt angeordnet sein, ferner können die Durchbrechungen als Bohrungen und/oder als Langlöcher gestaltet sein, wobei letztere zur Luftströmungsrichtung parallel, schräg oder quer gerichtet angeordnet sein können. Mit der Erfindung sind somit in vorteilhafter Weise viele Möglichkeiten zur optimalen Gestaltung der Vermischung von Abgas und Ansaugluft gegeben.

Weiter ist das Mischgehäuse nach einem Teilmerkmal des Hauptanspruches als flaches und axial kurz gestaltetes Bauteil beschrieben, das in weiterer Ausgestaltung der Erfindung mit dem Ventilgehäuse als ein einteiliges Gußteil gestaltet ist, wobei der jeweilige Durchmesser für den Leitungsdurchgang und der für den Anschluß der Abgasrückführleitung so minimal gewählt ist, daß ein dem jeweiligen maschinenabhängigen Mediumsdurchsatz entsprechend großer Durchmesser fertigungstechnisch herstellbar ist.

Mit dieser vorteilhaften Ausgestaltung der Erfindung ist mit einem einzigen Mischgehäuse die Möglichkeit eröffnet, jedes Mischgehäuse entsprechend den gegebenen Mediumsdurchsätzen mit dem zugehörigen Durchmesser zu versehen, so daß in vorteilhafter Weise beispielsweise eine einzige Fertigungslinie für das als Gußteil gefertigte Mischgehäuse genügt.

Zur Erzielung einer geringen Empfindlichkeit gegen Verschmutzung einenteils und zur Erzielung einer kompakten, kleinbauenden Bauweise des Mischgehäuses andererseits ist gemäß dem letzten Teilmerkmal des Hauptanspruches das Tellerventil von einer Schließfeder beaufschlagt, die eine relativ hohe Schließkraft aufweisen kann, wobei das Ventil von einem zu seiner Ventilbewegungsrichtung rechtwinklig am Mischgehäuse angeordneten Antrieb gesteuert angetrieben ist. In Weiterbildung der Erfindung ist der Antrieb über eine Konsole am Mischgehäuse vorzugsweise lösbar angeordnet, wobei zur Betätigung des stark federbelasteten Tellerventils der Antrieb einen getaktet ansteuerbaren Gleichstrommotor sowie ein stark untersetzendes Getriebe angeordnet sind zum Antrieb eines über eine Anlaufplatte auf das Tellerventil einwirkenden Nockens. Dieser kann zur weiteren Verringerung der Empfindlichkeit gegen Verschmutzung in seiner Nockenkontur sowie die zugehörige Anlaufplatte derart gestaltet sein, daß eine Drehung des Tellerventils bei Betätigung des Nockens erzielt ist.

In weiterer Ausgestaltung der Erfindung kann am Getriebe des Antriebes ein die Drehlage des Nockens erfassender Drehlagensensor vorgesehen sein, dessen Signale der Steuerung des Gleichstrommotors und/oder einer on-board-Diagnose-Einrichtung zugeführt sind.

Mit dem Drehlagensensor wird in vorteilhafter Weise der Öffnungsgrad des Tellerventils erfaßt, wobei zur Offenhaltung des Tellerventils der Gleichstrommotor bestromt bleibt, wobei mittels der erfindungsgemäßen Zwischenschaltung eines stark untersetzenden Getriebes die Stromaufnahme des Gleichstrommotors relativ gering gehalten ist bei sicherer Offenhaltung des Tellerventils. Weiter erfaßt der Drehlagensensor bei einer Verschmutzung des Ventilsitzes des Tellerventils durch das Nichterreichen der Null-Lage das geöffnete Ventil, woraus ein Signal für die OBD-Einrichtung abgeleitet wird.

Schließlich ist in Verbindung mit den für die entsprechenden Mediums-Durchsatzraten in der Fertigung anpaßbaren Durchmessern sowohl für den Leitungsdurchgang des Mischgehäuses als auch für den Anschluß der Abgasrückführleitung im Ventilgehäuse die weitere erfindungsgemäße Maßnahme vorteilhaft, wonach der Ventilsitz im Ventilgehäuse für das Tellerventil einen Kegelabschnitt für Tellerventile von unterschiedlichen Durchmessern umfaßt. Damit kann in vorteilhafter Weise ein für den jeweiligen Abgasdurchsatz zur Steuerung erforderlich großes Tellerventil zum Einsatz kommen.

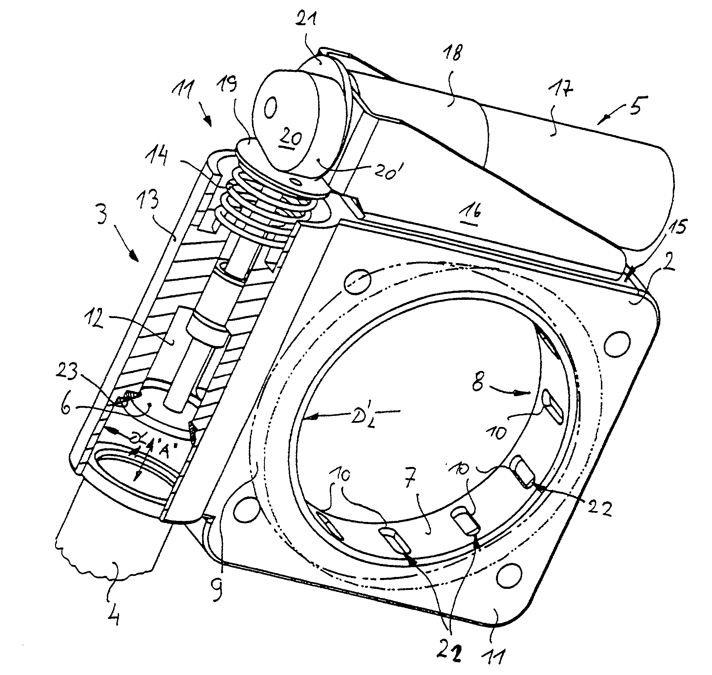

Die Erfindung ist anhand eines in der Zeichnung dargestellten Ausführungsbeispiels beschrieben.

Eine perspektivisch dargestellte Vorrichtung 1 zur gesteuerten Abgasrückführung in eine nicht gezeigte Luftzufuhreinrichtung einer nicht dargestellten Brennkraftmaschine umfaßt ein zwischen Leitungsabschnitten der nicht gezeigten Luftzufuhreinrichtung vorgesehenes Mischgehäuse 2, das eine bauliche Einheit mit einem Abschnitt 3 einer Abgasrückführleitung 4 und einem darin angeordneten, mit einem ansteuerbaren Antrieb 5 wirkverbundenen Tellerventil 6 bildet.

Das Mischgehäuse 2 weist einen von einer Wandung 7 eines Leitungsdurchganges 8 begrenzten Ringkanal 9 auf, der mittels über den Umfang des Leitungsdurchganges 8 in der Wandung 7 verteilt angeordneter Durchbrechungen 10 der Abgaseinführung in die zugeführte Luft dient. Der zwischen planen Anschlußflächen 11 des flach und axial kurz gestalteten Mischgehäuses 2 sich axial erstreckende Ringkanal 9 steht mit einer stromab des Tellerventils 6 angeordneten Überströmkammer 12 in dem als Abschnitt 3 der Abgasrückführleitung 4 gestalteten Ventilgehäuse 13 in abgasführender Verbindung. Das in dem Ventilgehäuse 13 geführt angeordnete Tellerventil 6 ist in Schließrichtung von einer Schließfeder 14 beaufschlagt. Zum gesteuerten Öffnen des Tellerventils 6 dient ein zur Ventilbewegungsrichtung gemäß Pfeil "A" rechtwinklig am Mischgehäuse 2 angeordneter Antrieb 5.

Zur lösbaren Anordnung des Antriebes 5 am Mischgehäuse 2 weist dieses eine Anschlagfläche 15 auf für eine Konsole 16, auf der ein getaktet ansteuerbarer Gleichstrommotor 17 sowie ein stark untersetzendes Getriebe 18 angeordnet sind zum Antrieb eines über eine Anlaufplatte 19 auf das federbelastete Tellerventil 6 einwirkenden Nockens 20. Um für das Tellerventil 6 die Empfindlichkeit gegen Verschmutzung herabzusetzen, kann die Nockenkontur 20' des Nockens und die Kontur der Anlaufplatte 19 zur Drehung des Tellerventils 6 bei Einwirkung des Nockens 20 zum Öffnen des Tellerventils entsprechend gestaltet sein.

Zur Erzielung einer kompakten Baueinheit ist das Mischgehäuse 2 mit dem Ventilgehäuse 13 als ein einteiliges Gußteil gestaltet, wobei der jeweilige Durchmesser D_{L} für den Leitungsdurchgang 8 und der Durchmesser D_{A} für den Anschluß der Abgasrückführieitung 4 im Gußteil so minimal gewählt ist, daß ein dem jeweiligen, maschinenabhängigen Mediumsdurchsatz entsprechend größerer Durchmesser D'_{L}, D'_{A} fertigungstechnisch einfach herstellbar ist.

Weitere Variationen des Mischgehäuses 2 sind ferner dadurch erreicht, daß die Durchbrechungen 10 in der Wandung 7 des Leitungsdurchganges 8 gleichmäßig und/oder ungleichmäßig über den Umfang verteilt angeordnet sind, und daß die Durchbrechungen 10 ferner als Bohrungen und/oder als Langlöcher 22 gestaltet sind, wobei letztere zur Luftströmungsrichtung parallel, schräg und/oder quer gerichtet angeordnet sein können. Damit kann für die jeweilige Brennkraftmaschine eine optimale Zumischung von Abgas in die Ansaugluft der nicht dargestellten Brennkraftmaschine verwirklicht werden.

Eine weitere Optimierungsmöglichkeit der Vorrichtung 1 ist dadurch erreicht, daß ein Ventilsitz 23 für das Tellerventil 6 einen entsprechend bemessenen Kegelabschnitt für Tellerventile 6 von unterschiedlichen Durchmessern umfaßt.

Schließlich ist zur genauen Öffnungssteuerung bzw. Offenhaltung des Tellerventiles 6 am Getriebe 18 ein die Drehlage des auf das Tellerventil 6 einwirkenden Nockens 20 erfassender Drehlagensensor 21 vorgesehen, dessen Signale der Steuerung des auch in der Offenhaltung des Tellerventils 6 getaktet bestromten Gleichstrommotors 17 dienen. Erreicht dagegen der Nocken 20 wegen eines verschmutzten Tellerventiles 6 die Null-Lage nicht, wird ein aus dieser Abweichung gebildetes Signal einer on-board-Diagnose-Einrichtung bzw. OBD-Einrichtung zugeführt.

Mit der vorbeschriebenen Erfindung ist in vorteilhafter Weise eine hochintegrierte Bauweise bei einfacher Funktionsverknüpfung von Mischgehäuse und mechanischem Regelanteil erzielt, wobei die erfindungsgemäße Vorrichtung bei reduziertem Gewicht in eine Luftzufuhreinrichtung einfach integrierbar ist und schließlich eine geringe Empfindlichkeit gegen Verschmutzung und thermische Belastung aufweist.

## Patentansprüche

1. Vorrichtung zur gesteuerten Abgasrückführung in eine Luftzufuhreinrichtung einer Brennkraftmaschine,
- wobei ein zwischen Leitungsabschnitten der Luftzufuhreinrichtung vorgesehenes Mischgehäuse (2) eine bauliche Einheit mit einem Abschnitt (3) einer Abgasrückführleitung (4) und einem darin angeordneten, mit einem ansteuerbaren Antrieb (5) wirkverbundenen Tellerventil (6) bildet,
**dadurch gekennzeichnet,**
- **daß** das Mischgehäuse (2) einen von einer Wandung (7) eines Leitungsdurchganges (8) begrenzten Ringkanal (9) aufweist, der
- mittels über den Umfang des Leitungsdurchganges (8) in der Wandung (7) verteilt angeordneter Durchbrechungen (10) der Abgaseinführung in die zugeführte Luft dient, wobei
- der zwischen planen Anschlußflächen (11) eines flach und axial kurz gestalteten Mischgehäuses (2) sich axial erstreckende Ringkanal (9) mit einer stromab des Tellerventils (6) angeordneten Überströmkammer (12) in dem als Abschnitt (3) der Abgasrückführleitung (4) gestalteten Ventilgehäuse (13) in abgasführender Verbindung steht, und
- wobei ferner das von einer Schließfeder (14) beaufschlagte Tellerventil (6) von einem zur Ventilbewegungsrichtung (Pfeil "A") rechtwinkelig am Mischgehäuse (2) angeordneten Antrieb (5) gesteuert angetrieben ist.

2. Vorrichtung nach Anspruch 1, **dadurch gekennzeichnet,**
- **daß** das Mischgehäuse (2) eine Anschlagfläche (15) aufweist für eine Konsole (16), auf der
- ein getaktet ansteuerbarer Gleichstrommotor (17) sowie ein stark untersetzendes Getriebe (18) angeordnet sind zum Antrieb eines über eine Anlaufplatte (19) auf das federbelastete Tellerventil (6) einwirkenden Nockens (20), wobei
- ggf. dessen Nockenkontur (20') und die Anlaufplatte (19) zur Drehung des Tellerventils (6) entsprechend gestaltet sind.

3. Vorrichtung nach Anspruch 1 und 2, **dadurch gekennzeichnet,**
- **daß** das Mischgehäuse (2) mit dem Ventilgehäuse (13) als einteiliges Gußteil gestaltet ist, wobei
- der jeweilige Durchmesser (D_{L}) für den Leitungsdurchgang (8) und der Durchmesser (D_{A}) für den Anschluß der Abgasrückführleitung (4) im Gußteil so minimal gewählt ist, daß
- ein dem jeweiligen, maschinenabhängigen Mediumsdurchsatz entsprechender Durchmesser (D'_{L}, D'_{A}) fertigungstechnisch hergestellt ist.

4. Vorrichtung nach einem der Ansprüche 1 bis 3, **dadurch gekennzeichnet,**
- **daß** am Getriebe (18) ein die Drehlage des Nockens (20) erfassender Drehlagensensor (21) vorgesehen ist, dessen
- Signale der Steuerung des Gleichstrommotors (17) und/oder einer OBD-Einrichtung zugeführt sind.

5. Vorrichtung nach einem der Ansprüche 1 bis 4, **dadurch gekennzeichnet,**
- **daß** die Durchbrechungen (10) in der Wandung (7) des Leitungsdurchganges (8) im Mischgehäuse (2) gleichmäßig und/oder ungleichmäßig über den Umfang verteilt angeordnet sind, und
- **daß** die Durchbrechungen (10) ferner als Bohrungen und/oder als Langlöcher (22) gestaltet sind, wobei
- letztere zur Luftströmungsrichtung parallel, schräg und/oder quer gerichtet angeordnet sein können.

6. Vorrichtung nach einem der Ansprüche 1 bis 5, **dadurch gekennzeichnet, daß** ein Ventilsitz (23) für das Tellerventil (6) einen entsprechend bemessenen Kegelabschnitt für Tellerventile (6) von unterschiedlichen Durchmessern umfaßt.

## Claims

1. A device for controlled recycling of exhaust gas into an air supply device in an internal combustion engine,
- wherein a mixing casing (2) provided between line portions of the air supply device constitutes a structural unit comprising a portion (3) of an exhaust gas recycling line (4) and a disc valve (6) disposed therein and co-operating with an actuatable drive (5),
**characterised in that**
- the mixing casing (2) has an annular duct (9) bounded by a wall (7) of a line passage (8) and
- used for introducing exhaust gas into the air supply via apertures (10) distributed in the wall (7) over the periphery of the line passage (8), wherein
- the annular duct (9), which extends axially between planar connecting surfaces (11) of a flat, axially short mixing casing (2), is connected and supplies exhaust gas to an overflow chamber (12) disposed downstream of the disc valve (6) in the valve casing (13), which forms a portion (3) of the exhaust gas recycling line (4), and
- wherein the disc valve (6), actuated by a closing spring (14), is controlled by a drive (5) disposed on the mixing casing (2) at right angles to the direction (arrow "A") in which the valve moves.

2. A device according to claim 1, **characterised in that**
- the mixing casing (2) has an abutment surface (15) for a bracket (16), on which
- a clocked actuatable DC motor (17) and a gear unit (18) with a high step-down ratio are disposed for driving a cam (20) acting via a butting plate (19) on the spring-loaded disc valve (6) wherein
- if possible, the cam contour (20') and the butting plate (19) are designed as required for rotating the disc valve (6).

3. A device according to claims 1 and 2, **characterised in that** the mixing casing (2) is a casting in one piece with the valve casing (13), wherein
- the diameter (D_{L}) for the line passage (8) and the diameter (D_{A}) for the connection to the exhaust gas recycling line .(4) in the casting are made so small that
- a diameter (D'_{L}, D'_{A}) corresponding in each case to the throughput of medium in dependence on the engine can be obtained by functional efficiency.

4. A device according to any of claims 1 to 3, **characterised in that**
- a sensor (21) for detecting the rotary position of the cam (20) is provided on the gear unit (18) and
- supplies signals for controlling the DC motor (17) and/or an on-board diagnosis device.

5. A device according to any of claims 1 to 4, **characterised in that**
- the apertures (10) in the wall (7) of the line passage (8) are uniformly and/or non-uniformly distributed over the periphery in the mixing casing (2) and
- the apertures (10) are also in the form of bores and/or slots (22), wherein
- the slots can be disposed parallel, slantwise and/or at right angles to the direction of air flow.

6. A device according to any of claims 1 to 5, **characterised in that** a valve seat (23) for the disc valve (6) has a conical portion suitably dimensioned for disc valves (6) of different diameter.

## Revendications

1. Dispositif pour la recirculation de gaz d'échappement régulée dans un conduit d'air d'admission d'un moteur à combustion interne
- dans lequel un boîtier de mélange (2) prévu entre des segments de conduit du conduit d'air d'admission forme une unité de construction avec un segment (3) d'un conduit de recirculation de gaz d'échappement (4) et une soupape à disque (6) disposée dans celui-ci, reliée de manière active avec un entraînement (5) pouvant être commandé,
**caractérisé en ce que**
- le boîtier de mélange (2) présente un canal annulaire (9) délimité par une paroi (7) d'un passage constitué par un conduit (8), canal qui,
- au moyen de perçages (10) disposés de manière répartie dans la paroi (7) sur la circonférence du passage constitué par un conduit (8), sert à l'introduction du gaz d'échappement dans l'air admis,
- le canal annulaire (9) s'étendant axialement entre des faces de raccordement (11) planes d'un boîtier de mélange (2) conçu plat et axialement court, étant en liaison, conduisant le gaz d'échappement, avec une chambre d'écoulement de surcharge (12) disposée en aval de la soupape à disque (6), dans le boîtier de soupape (13) conçu en tant que segment (3) du conduit de recirculation de gaz d'échappement (4), et
- de plus, la soupape à disque (6) sollicitée par un ressort de fermeture (14) étant entraînée, en étant commandée, par un entraînement (5) disposé sur le boîtier de mélange (2) à angle droit par rapport à la direction du mouvement de la soupape (flèche "A").

2. Dispositif selon la revendication 1,
**caractérisé en ce que**
- le boîtier de mélange (2) présente une surface de butée (15) pour une console (16) sur laquelle
- un moteur à courant continu (17) pouvant être commandé de manière synchronisée ainsi qu'une transmission (18) à forte démultiplication sont prévus pour l'entraînement d'une came (20) agissant, par l'intermédiaire d'une plaque de démarrage (19), sur la soupape à disque (6) sollicitée par ressort,
- le cas échéant, le contour (20') de la came et la plaque de démarrage ( 19) sont conçus de manière adéquate pour la rotation de la soupape à disque (6).

3. Dispositif selon les revendications 1 et 2,
**caractérisé en ce que**
- le boîtier de mélange (2) est conçu sous forme de pièce moulée en fonte en un bloc avec le boîtier de soupape ( 13),
- le diamètre respectif (D_{L)} du passage constitué par un conduit (8) et le diamètre (D_{A)} du raccordement du conduit de recirculation de gaz d'échappement (4) étant choisis dans la pièce moulée en fonte de manière minimale, de façon telle
- qu'un diamètre (D'_{L}, D'_{A}) correspondant au débit respectif de fluide dépendant de l'appareil est réalisable par la technique de fabrication.

4. Dispositif selon l'une quelconque des revendications 1 à 3,
**caractérisé en ce qu'**
- il est prévu sur la transmission (18) un détecteur de situation de rotation (21) détectant la situation de rotation de la came (20), dont
- les signaux sont transmis à la commande du moteur à courant continu (17) et/ou à un dispositif de diagnostic de bord.

5. Dispositif selon l'une quelconque des revendications 1 à 4,
**caractérisé en ce que**
- les perçages (10) sont disposés dans la paroi (7) du passage constitué par un conduit (8) dans le boîtier de mélange (2) en étant répartis régulièrement et/ou irrégulièrement sur la circonférence, et
- les perçages (10) sont conçus en tant qu'alésage et/ou trous oblongs (22),
- ces derniers pouvant être disposés de façon parallèle, inclinée ou perpendiculaire par rapport à la direction d'écoulement de l'air.

6. Dispositif selon l'une quelconque des revendications 1 à 5,
**caractérisé en ce qu'**
un siège (23) de soupape pour la soupape à disque (6) comprend une section conique dimensionné de manière appropriée pour soupapes à disque (6) de différents diamètres.
